(19) Europäisches Patentamt
European Patent Office
Office européen des brevets

(11) **EP 4 592 778 A1**

(12) **EUROPEAN PATENT APPLICATION**
published in accordance with Art. 153(4) EPC

(43) Date of publication:
30.07.2025 Bulletin 2025/31

(21) Application number: 23877108.3

(22) Date of filing: 22.09.2023

(51) International Patent Classification (IPC):
*G05B 19/404* (2006.01)   *B23B 25/06* (2006.01)
*B23Q 15/24* (2006.01)   *B23Q 17/22* (2006.01)

(52) Cooperative Patent Classification (CPC):
**B23B 25/06; B23Q 15/24; B23Q 17/22;**
**G05B 19/404**

(86) International application number:
**PCT/JP2023/034448**

(87) International publication number:
**WO 2024/080102 (18.04.2024 Gazette 2024/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.10.2022 JP 2022163928**

(71) Applicant: **DMG Mori Co., Ltd.**
**Yamatokoriyama-shi, Nara 639-1160 (JP)**

(72) Inventor: **HIRONO, Yoko**
**Yamatokoriyama-shi, Nara 639-1160 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **CORRECTION METHOD FOR RELATIVE POSITION OF WORKPIECE AND MACHINING BODY THAT MACHINES SAID WORKPIECE**

(57)     There is provided a correction method that enables highly accurate correction of a relative position between a workpiece and a machining body during machining of the workpiece in a machine tool including a movable workpiece spindle headstock capable of moving in a predetermined direction.

A deviation amount in a relative position between a workpiece spindle (11) mounted on the movable workpiece spindle headstock (4) and a machining body holding unit (7) is calculated after the movable workpiece spindle headstock (4) is moved to an intended usage position for machining of the workpiece, a deviation amount in the relative position between the workpiece (W) and the machining body (T) during machining of the workpiece is estimated based on the calculated deviation amount, and a feed mechanism unit is controlled so as to correct the estimated deviation amount.

FIG. 6A

## Description

[TECHNICAL FIELD]

The present invention relates to a correction method of correcting the relative position between a workpiece and a machining body that machines the workpiece, in a machine tool having a movable workpiece spindle headstock capable of moving in a predetermined direction.

[BACKGROUND ART]

Traditionally, a method of correcting the relative position between a workpiece and a tool (machining body) during machining in a machine tool has been known (e.g., see Patent Document 1). This correction method is applied to a machining center having a tilt table. Before the start of machining of a workpiece, a reference ball is attached to the tilt table, and a displacement amount of the center position of the reference ball is measured by a touch probe attached to a tool spindle. Then, after the start of machining of the workpiece, machining control is executed based on the measured displacement amount to correct the relative position between the workpiece and the tool.

[PRIOR ART DOCUMENTS]

[PATENT DOCUMENTS]

[Patent Document 1] Japanese Unexamined Patent Publication No. 2017-194451

[SUMMARY OF THE INVENTION]

[PROBLEM TO BE SOLVED]

The correction method shown in Patent Document 1 can also be applied to a lathe-based multitasking machine. This multitasking machine, usually, includes a workpiece spindle configured to hold a workpiece, a workpiece spindle headstock on which the workpiece spindle is mounted, a machining body holding unit configured to hold a tool (machining body), a machining body movable table capable of moving with the machining body holding unit mounted, a feed mechanism unit capable of changing the relative position between the workpiece spindle headstock and the machining body movable table, in which a reference ball (reference object) is attached to the workpiece spindle, and a touch probe (measurement sensor) is attached to the machining body holding unit. This way, the relative position between the workpiece and the machining body can be corrected through a method similar to the Patent Document 1. Note that the machining body holding unit is constituted by, for example, a tool spindle holding a rotatable tool (machining body) or a turret holding a non-rotatable tool (machining body) on its circumference.

As types of the workpiece spindle headstock, there are two types: a fixed workpiece spindle headstock, which is immovably fixed to the machine tool, and a movable workpiece spindle headstock, which is movable in a predetermined direction. When applying the correction method using the reference object to a machine tool having a movable workpiece spindle headstock, the following problem arises.

Namely, the position of the movable workpiece spindle headstock during machining of the workpiece is varied depending on the size of the workpiece to be machined or the like. This will cause a situation where the position of the movable workpiece spindle headstock when measuring the reference object and the position of the movable workpiece spindle headstock during machining are different. As described, if the position of the movable workpiece spindle headstock differs between the time of measuring the reference object and the time of machining the workpiece, sufficient correction accuracy cannot be ensured even if the relative position between the workpiece and the machining body during machining of the workpiece is corrected based on the measured positional information of the reference object.

The present invention has been made in view of the above circumstances, and an object of the present invention is to provide a correction method that enables highly accurate correction of the relative position between a workpiece and a machining body during machining of the workpiece in a machine tool having a movable workpiece spindle headstock that is movable in a predetermined direction.

[SOLUTION TO PROBLEM]

A first aspect of the present invention is drawn to a correction method of correcting a relative position between a workpiece and a machining body during machining in a machine tool that includes: a movable workpiece spindle headstock capable of moving in a predetermined direction; a workpiece spindle mounted on the movable workpiece spindle headstock and configured to hold the workpiece; a machining body holding unit configured to hold the machining body that machines the workpiece; a machining body movable table capable of moving in a predetermined direction with the machining body holding unit mounted; a feed mechanism unit capable of changing a relative position between the movable workpiece spindle headstock and the machining body movable table, the method including: a moving process of, before a start of machining of the workpiece, moving the movable workpiece spindle headstock by the feed mechanism unit to its intended usage position for machining of the workpiece; a positional deviation calculation process of calculating a deviation amount in a relative position between the workpiece spindle mounted on the movable workpiece spindle headstock having moved to the intended usage position and the machining body holding unit; and a correction control process of estimating a deviation amount in the relative position between the workpiece and the machining body during machining of the workpiece based on the deviation amount calculated in the positional deviation calculation process, and controlling the feed mechanism unit so as to correct the estimated deviation amount.

According to the first aspect, in the moving process, the movable workpiece spindle headstock that supports the workpiece spindle is moved to its intended usage position for machining of the workpiece. Then, in the positional deviation calculation process, a deviation amount in the relative position between the workpiece spindle mounted on the movable workpiece spindle headstock having moved to the intended usage position and the machining body holding unit is calculated. The processes up to this point are executed before machining of the workpiece. After the start of machining of the workpiece, in the correction control process, a deviation amount in the relative position between the workpiece and the machining body during machining of the workpiece is estimated based on the deviation amount in the relative position between the workpiece spindle and the machining body holding unit calculated in the positional deviation calculation process, and the feed mechanism unit is controlled so as to correct the estimated deviation amount.

Therefore, for example, even in a case where the relative positional relation between the workpiece spindle and the machining body holding unit changes due to wear of a mechanical element or the like and the relative position between the workpiece and the machining body deviates by an amount according to the position of the movable workpiece spindle headstock, that deviation amount can be appropriately corrected by the feed mechanism unit during machining of the workpiece. Therefore, for example, the accuracy of machining of the workpiece by the machining body can be improved even when the position of the movable workpiece spindle headstock is changed according to the size of the workpiece.

A second aspect of the present invention further includes an attachment process of, before the start of machining of the workpiece, attaching a reference object to one of the workpiece spindle mounted on the movable workpiece spindle headstock and the machining body holding unit and attaching a measurement sensor, capable of measuring positional information of the reference object, to the other one of the workpiece spindle and the machining body holding unit, to which the reference object is not attached, wherein, in the positional deviation calculation process, positional information of the reference object is measured by the measurement sensor, and a deviation amount in the relative position between the workpiece spindle and the machining body holding unit is calculated based on the measured positional information.

According to the second aspect, the deviation amount can be identified through in-machine measurement using the movable workpiece spindle headstock and the machining body holding unit.

A third aspect of the present invention is such that in the attachment process, the reference object is attached to the workpiece spindle mounted on the movable workpiece spindle headstock, and the measurement sensor is attached to the machining body holding unit.

According to the third aspect, the measurement sensor is attached to the machining body holding unit. Therefore, by exchanging the tool and the measurement sensor using, for example, an automatic tool changer (ATC), the attachment work is simplified while facilitating maintenance of the attachment accuracy and the like. Further, the measurement of the position of the reference object attached to the workpiece spindle is executed after the movable workpiece spindle headstock is moved to its intended usage position for machining of the workpiece. Therefore, the position of the movable workpiece spindle headstock when measuring the reference object is the same as that when machining the workpiece. Therefore, the relative position between the workpiece and the machining body during machining of the workpiece can be accurately corrected based on the measured positional information of the reference object, even in a machine tool including a movable workpiece spindle headstock.

In a fourth aspect of the present invention, the method according to the third aspect is configured such that: the machine tool further includes a fixed workpiece spindle headstock immovably fixed to a predetermined position and configured to hold a workpiece spindle coaxially facing the workpiece spindle mounted on the movable workpiece spindle headstock; the attachment process further includes a process of, before the start of machining of the workpiece, attaching a reference object to the workpiece spindle mounted on the fixed workpiece spindle headstock; the positional deviation calculation process further includes a process of measuring positional information of the reference object attached to the workpiece spindle mounted on the fixed workpiece spindle headstock by the measurement sensor attached to the machining body holding unit, and calculating a deviation amount in a relative position between the workpiece spindle mounted on the fixed workpiece spindle headstock and the machining body holding unit based on the measured positional information; and in the correction control process, a deviation amount in the relative position between the workpiece and the machining body during machining of the workpiece is estimated based on the deviation amount in the relative position between each workpiece spindle and the machining body holding unit calculated in the positional deviation calculation process, and the feed mechanism unit is controlled so as to correct the estimated deviation amount.

The fourth aspect of the present invention relates to a machine tool including a movable workpiece spindle headstock and a fixed spindle headstock facing the movable workpiece spindle headstock. In the positional deviation calculation process, positional information of the reference object attached to the workpiece spindle mounted on the fixed workpiece spindle headstock is measured by the measurement sensor, in addition to the positional information of the reference object attached to the workpiece spindle mounted on the movable workpiece spindle headstock. Based on the measured positional information of each reference object, a deviation amount in the relative position between each workpiece spindle and the machining body holding unit is calculated. Based on the calculated deviation amount in each relative position, a deviation amount in the relative position between the workpiece and the machining body during machining of the workpiece is estimated, and the feed drive unit is controlled so as to correct each estimated deviation amount. Thus, appropriate deviation amount correction is enabled, even in a machine tool including a movable workpiece spindle headstock and a fixed workpiece spindle headstock.

In a fifth aspect of the present invention, the method according to the third aspect is configured such that: the machine tool includes two movable workpiece spindle headstocks and the two movable workpiece spindle headstocks are arranged so that the workpiece spindles mounted on the two movable workpiece spindle headstocks coaxially face each other; in the attachment process, a reference object is attached to the workpiece spindle mounted on each of the movable workpiece spindle headstocks; in the moving process, each of the movable workpiece spindle headstocks is moved to its intended usage position for machining of the workpiece; in the positional deviation calculation process, positional information of each reference object is measured by the measurement sensor attached to the machining body holding unit, and a deviation amount in the relative position between the workpiece spindle mounted on each of the movable workpiece spindle headstocks and the machining body holding unit is calculated based on the measured positional information of each reference object; and in the correction control process, a deviation amount in the relative position between the workpiece and the machining body during machining of the workpiece is estimated based on the deviation amount in the relative position between each workpiece spindle and the machining body holding unit calculated in the positional deviation calculation process, and the feed mechanism unit is controlled so as to correct the estimated deviation amount.

According to the fifth aspect, in a machine tool including two movable workpiece spindle headstocks arranged to face each other, positional information of the reference object attached to the workpiece spindle mounted on each of the movable workpiece spindle headstocks is measured by the measurement sensor after each of the movable workpiece spindle headstocks is moved to its intended usage position for machining of the workpiece. Based on the measured positional information of each reference object, a deviation amount in the relative position between the workpiece spindle mounted on each of the movable workpiece spindle headstocks and the machining body holding unit is calculated. Based on each calculated deviation amount, a deviation amount in the relative position between the workpiece and the machining body during machining of the workpiece is estimated, and the estimated deviation amount is corrected by the feed mechanism unit. Thus, appropriate deviation amount correction is enabled, even in a machine tool including a plurality of movable workpiece spindle headstocks.

In a sixth aspect of the present invention, the method according to the fourth aspect or the fifth aspect is configured such that, in the correction control process, during machining of the workpiece, the deviation amount in the relative position between each workpiece spindle and the machining body holding unit calculated in the positional deviation calculation process is interpolated according to a position of the machining body in a facing direction of the workpiece spindles to estimate a deviation amount in the relative position between the workpiece and the machining body at the position of the machining body, and the feed mechanism unit is controlled so as to correct the estimated deviation amount.

According to the sixth aspect, appropriate correction is possible in various forms of use, without actually measuring the deviation amounts in all combinations of the intended usage positions of the workpiece spindles and machining body holding unit.

In a seventh aspect of the present invention, the method according to the fourth aspect or the fifth aspect is configured such that: the machine tool is configured to execute machining of the workpiece by the machining body held on the machining body holding unit in a state where both ends of the workpiece in its extending direction are supported by the two workpiece spindles facing each other; and in the correction control process, during machining of the workpiece, the deviation amount in the relative position between each workpiece spindle and the machining body holding unit calculated in the positional deviation calculation process is linearly interpolated according to the position of the machining body in the extending direction of the workpiece to estimate a deviation amount in the relative position between the workpiece and the machining body at the position of the machining body, and the feed mechanism unit is controlled so as to correct the estimated deviation amount.

According to the seventh aspect, both ends of the workpiece in its extending direction are supported by the two workpiece spindles during machining of the workpiece. Focusing on the point that the machining body is positioned between the two workpiece spindles, the deviation amount in the relative position between each workpiece spindle and the machining body holding unit calculated in the positional deviation calculation process is linearly interpolated according to the position of the machining body in the extending direction of the workpiece to thereby estimate a deviation amount in the relative position between the workpiece and the machining body at the position of the machining body. Thus, by measuring the deviation amounts at the representative points (both ends of the workpiece), the deviation amount at any position of the machining body can be estimated to correct the feed mechanism. This reduces the burden of actual deviation amount measurement while enabling high accuracy.

In an eighth aspect of the present invention, the method according to any one of the first aspect to the seventh aspect is configured such that: the machine tool includes a pivot drive shaft coupled with the machining body movable table and rotatable about a predetermined axis, a pivot drive unit configured to rotationally drive the pivot drive shaft, and a rotation fixing mechanism configured to fix the pivot drive shaft in a non-rotatable manner; the rotation fixing mechanism has a plurality of fixing mechanism units capable of fixing the pivot drive shaft in a non-rotatable manner and is configured to be switchable among a plurality of operational states, which are different in a combination of active/inactive states of the plurality of fixing mechanism units; the positional deviation calculation process is executed for each of the plurality of operational states; and in the correction control process, during machining of the workpiece, a current operational state of the rotation fixing mechanism is determined out of the plurality of operational states, the deviation amount corresponding to the operational state determined is specified out of the deviation amounts in the relative position between the workpiece spindle and the machining body holding unit calculated in the positional deviation calculation process, a deviation amount in the relative position between the workpiece and the machining body is estimated based on the deviation amount specified, and the feed mechanism unit is controlled so as to correct the estimated deviation amount.

In a ninth aspect of the present invention, the method according to the eighth aspect is configured such that the rotation fixing mechanism comprises, as the plurality of fixing mechanism units, a first fixing mechanism unit configured to mechanically fix the pivot drive shaft, and a second fixing mechanism unit that is an electromagnetic brake mechanism attached to the pivot drive unit.

According to the eighth aspect and the ninth aspect, the deviation amount in the relative position between the workpiece and the machining body can be highly accurately corrected according to the operational state of the rotation fixing mechanism for the pivot drive shaft. Therefore, even if deformation of a structure supporting the machining body movable table or bending deformation of the pivot drive shaft occurs due to operation of the rotation fixing mechanism, the relative position between the workpiece and the machining body during machining of the workpiece can be highly accurately corrected, so that a constant positional relationship between them is maintained. Further, the accuracy of machining of the workpiece by the machining body can be improved to the greatest extent possible.

In a tenth aspect of the present invention, the method according to any one of the first aspect to the ninth aspect is configured such that: the machine tool includes a pivot drive shaft coupled with the machining body movable table and rotatable about a predetermined axis, and a pivot drive unit configured to rotationally drive the pivot drive shaft; in the positional deviation calculation process, the pivot drive shaft is rotated by the pivot drive unit so as to change an angle of the machining body movable table about the predetermined axis to a plurality of preset angular positions, positional information of the reference object is measured at each angular position, and a deviation amount in the relative position between the workpiece spindle and the machining body holding unit is calculated based on the measured positional information; and in the correction control process, during machining of the workpiece, a pivot angle of the pivot drive shaft about the predetermined axis is obtained, the deviation amount at each measurement position calculated in the positional deviation calculation process is linearly interpolated according to the obtained pivot angle to estimate a deviation amount in the relative position between the workpiece and the machining body, and the feed mechanism unit is controlled so as to correct the estimated deviation amount.

According to the tenth aspect, the relative position between the workpiece and the machining body can be appropriately corrected according to the pivot angle of the machining body movable table about the predetermined axis, thereby enabling the accuracy of machining of the workpiece by the machining body to be improved to the greatest extent possible.

An eleventh aspect of the present invention is such that, in the positional deviation calculation process, the deviation amount in the relative position between the workpiece spindle and the machining body holding unit is calculated based on an image captured by a camera provided inside or outside the machine tool.

According to the eleventh aspect, the deviation amount in the relative position between the workpiece spindle and the machining body holding unit can be measured in a non-contact manner by using, for example, a camera provided inside the machine tool or a camera mounted on a robot such as an AGV that loads and unloads workpieces.

A twelfth aspect of the present invention is drawn to a machine tool including: a movable workpiece spindle headstock capable of moving in a predetermined direction; a workpiece spindle mounted on the movable workpiece spindle headstock and configured to hold a workpiece; a machining body holding unit configured to hold a machining body that machines the workpiece; a machining body movable table capable of moving in a predetermined direction with the machining body holding unit mounted; a feed mechanism unit capable of changing a relative position between the movable workpiece spindle headstock and the machining body movable table; and a program execution unit configured to execute: a moving process of, before a start of machining of the workpiece, moving the movable workpiece spindle headstock by the feed mechanism unit to its intended usage position for machining of the workpiece; a positional deviation calculation process of calculating a deviation amount in a relative position between the workpiece spindle mounted on the movable workpiece spindle headstock having moved to the intended usage position and the machining body holding unit; and a correction control process of estimating a deviation amount in a relative position between the workpiece and the machining body during machining of the workpiece based on the deviation amount calculated in the positional deviation calculation process, and controlling the feed mechanism unit so as to correct the estimated deviation amount.

According to the twelfth aspect, the deviation amount in the relative position between the workpiece spindle and the machining body holding unit can be automatically measured and corrected according to the position of the movable workpiece spindle headstock designated by, for example, a machining program, thereby achieving a machine tool with high machining accuracy.

A thirteenth aspect of the present invention is drawn to a program for use in a machine tool that includes: a movable workpiece spindle headstock capable of moving in a predetermined direction; a workpiece spindle mounted on the movable workpiece spindle headstock and configured to hold a workpiece; a machining body holding unit configured to hold a machining body that machines the workpiece; a machining body movable table capable of moving in a predetermined direction with the machining body holding unit mounted; and a feed mechanism unit capable of changing a relative position between the movable workpiece spindle headstock and the machining body movable table, the program configured to cause a computer to serve as a correction unit configured to execute: a moving process of, before a start of machining of the workpiece, moving the movable workpiece spindle headstock by the feed mechanism unit to its intended usage position for machining of the workpiece; a positional deviation calculation process of calculating a deviation amount in a relative position between the workpiece spindle mounted on the movable workpiece spindle headstock having moved to the intended usage position and the machining body holding unit; and a correction control process of estimating a deviation amount in a relative position between the workpiece and the machining body during machining of the workpiece based on the deviation amount calculated in the positional deviation calculation process, and controlling the feed mechanism unit so as to correct the estimated deviation amount.

The use of the thirteenth aspect enables effects similar to those of the twelfth aspect to be achieved by updating an existing program for a machine tool. Note that the program for a machine tool may be electronically distributed or may be recorded on a program storage medium such as a CD, a DVD, an HDD, a flash memory, or the like.

[ADVANTAGEOUS EFFECT OF THE INVENTION]

According to a correction method of the present invention, a deviation amount in the relative position between the workpiece spindle mounted on the movable workpiece spindle headstock and the machining body holding unit is calculated after the movable workpiece spindle headstock is moved to its intended usage position for machining of the workpiece, and a deviation amount in the relative position between the workpiece and the machining body during machining of the workpiece is estimated based on the calculated deviation amount, and the feed mechanism unit is controlled so as to correct the estimated deviation amount. Therefore, the relative position between the workpiece and the machining body during machining of the workpiece can be corrected with high accuracy, even in a machine tool including a movable workpiece spindle headstock.

[BRIEF DESCRIPTION OF THE DRAWINGS]

[FIG. 1] FIG. 1 is a perspective view showing an entire example of machine tool that achieves a correction method for the relative position between a workpiece and a tool according to an embodiment.
[FIG. 2] FIG. 2 is a longitudinal sectional view taken along the B-axis, showing a structure supporting a tool spindle headstock by a pivot drive shaft.
[FIG. 3] FIG. 3 is a table explaining an operational state of a rotation fixing mechanism of the pivot drive shaft coupled to the tool spindle headstock.
[FIG. 4] FIG. 4 is a block diagram showing a control configuration of the machine tool.
[FIG. 5] FIG. 5 is a perspective view showing a state in which a reference ball attached to a first workpiece spindle is measured by a touch probe attached to a tool spindle.
[FIG. 6A] FIG. 6A is an explanatory diagram illustrating the measurement of the reference ball by the machine tool.
[FIG. 6B] FIG. 6B is an explanatory diagram illustrating the measurement of the reference ball by the machine tool.
[FIG. 6C] FIG. 6C is an explanatory diagram illustrating the measurement of the reference ball by the machine tool.
[FIG. 7] FIG. 7 is an explanatory diagram illustrating positional deviation data generated by a measurement data processing device.
[FIG. 8] FIG. 8 is a schematic view showing a workpiece, supported at both ends by the first workpiece spindle and a second workpiece spindle, being machined by a tool held by the tool spindle.

[FIG. 9] FIG. 9 is a diagram corresponding to FIG. 7 for Embodiment 2.

## [DETAILED DESCRIPTION]

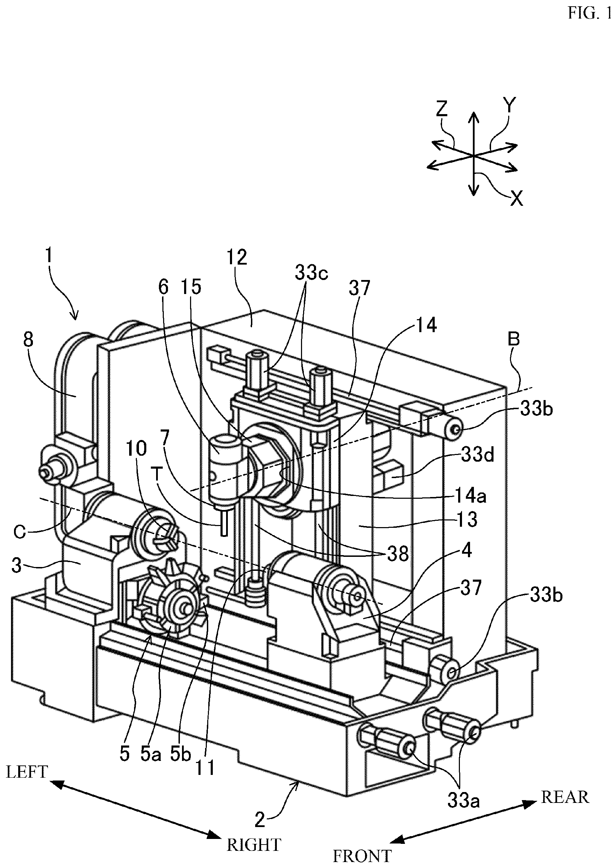

FIG. 1 is a perspective view showing an entire example of machine tool 1 that achieves a correction method for the relative position between a workpiece W and a tool T (an example of machining body) in an embodiment. Note that, in the following description, the front side and the rear side respectively refer to the front surface side and the rear surface side of the machine tool 1, and the left side and the right side respectively refer to the left side and the right side of the machine tool 1 as viewed from the front side.

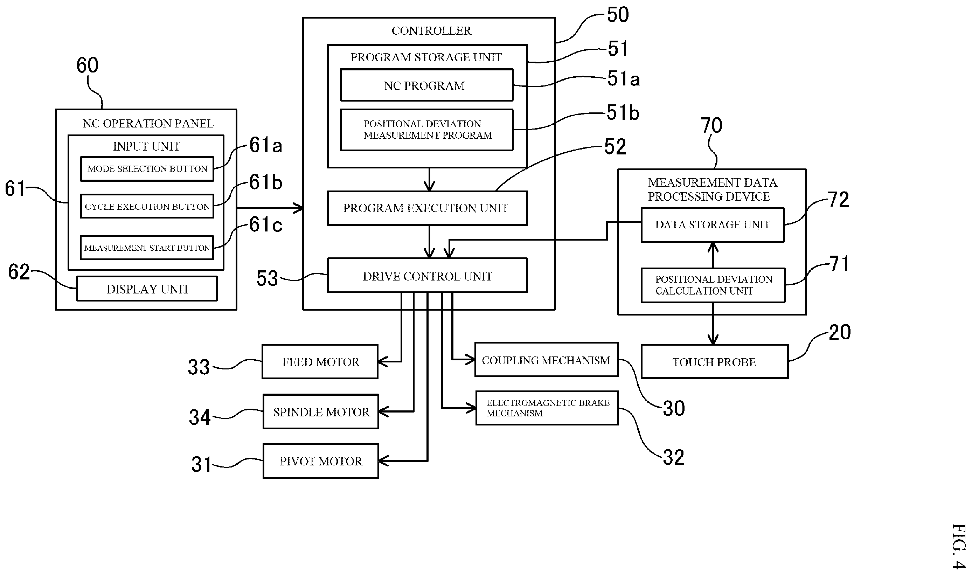

The machine tool 1 of the present example is a 5-axis controlled multi-tasking turning machine, including: a bed 2; a first workpiece spindle headstock 3 and a second workpiece spindle headstock 4 arranged on the bed 2 in such a manner as to face each other in the Z-axis direction (left-right direction); a turret tool post 5 arranged between the first workpiece spindle headstock 3 and the second workpiece spindle headstock 4, in such a manner as to be movable in the X-axis (up-down) direction and the Z-axis direction; a tool spindle headstock 6 (an example of machining body movable table) arranged on the bed 2 in such a manner as to be movable in the X-axis direction, the Y-axis (front-rear) direction, and the Z-axis direction; a tool spindle 7 (an example of machining body holding unit) held on the tool spindle headstock 6 and rotationally drives the tool T; and a controller 50 (see FIG. 4) configured to control the operation of each part of the machine tool 1. On the left side of the workpiece machining area on bed 2, a tool changer 8 is arranged to automatically replace the tool T mounted on the tool spindle 7 with another tool T that is to be used in the subsequent process.

The first workpiece spindle headstock 3 is fixed on the top surface of the bed 2 and supports a first workpiece spindle 10 so that the first workpiece spindle 10 is rotatable about a C-axis parallel to the Z-axis. On the other hand, the second workpiece spindle headstock 4 holds a second workpiece spindle **11** coaxially with the first workpiece spindle 10 so that the second workpiece spindle 11 is held to be rotatable about the C-axis. The second workpiece spindle headstock 4 is movable in the Z-axis direction by a pair of guide rails (not shown) provided on the top surface of the bed 2, and is moved in the Z-axis direction by a feed motor 33a and a feed screw (not shown). The first workpiece spindle 10 is driven by a first spindle motor (not shown), and the second workpiece spindle 11 is driven by a second spindle motor (not shown). The first workpiece spindle headstock 3 constitutes a fixed workpiece spindle headstock, and the second workpiece spindle headstock 4 constitutes a movable workpiece spindle headstock.

The turret tool post 5 has a turret 5a pivotable about an axis parallel to the Z-axis, and is configured to be movable in each of the X-axis and Z-axis directions by a feed motor and a feed screw (both of which are not shown). On the outer circumference of the turret 5a, turning tools 5b are radially arranged and spaced apart from each other in the circumferential direction.

The tool spindle headstock 6 is coupled with a column 12 standing on the top surface of the bed 2 via a saddle 13, a slider 14, and a ram 15.

The column 12 forms a gantry shape extending over the left and right end portions of the top surface of the bed 2, and the saddle 13 is configured to be movable in the Z-axis direction by a pair of guide rails (not shown) provided on the front surface of the column 12, and is moved in the Z-axis direction by a pair of feed screws 37 and a pair of feed motors 33b.

The slider 14 is configured to be movable in the X-axis direction by a pair of guide rails provided on the front surface of the saddle 13, and is moved in the X-axis direction by a pair of feed screws 38 and a pair of feed motors 33c.

The ram 15 is supported by a guide plate, which is not shown, so as to be movable in the Y-axis direction, while being inserted in a ram guide hole 14a formed in the slider 14. The ram 15 is moved in the Y-axis direction by a single feed screw (not shown) arranged at the lower end of the slider 14 in the middle of the width direction of the slider 14, and a feed motor 33d.

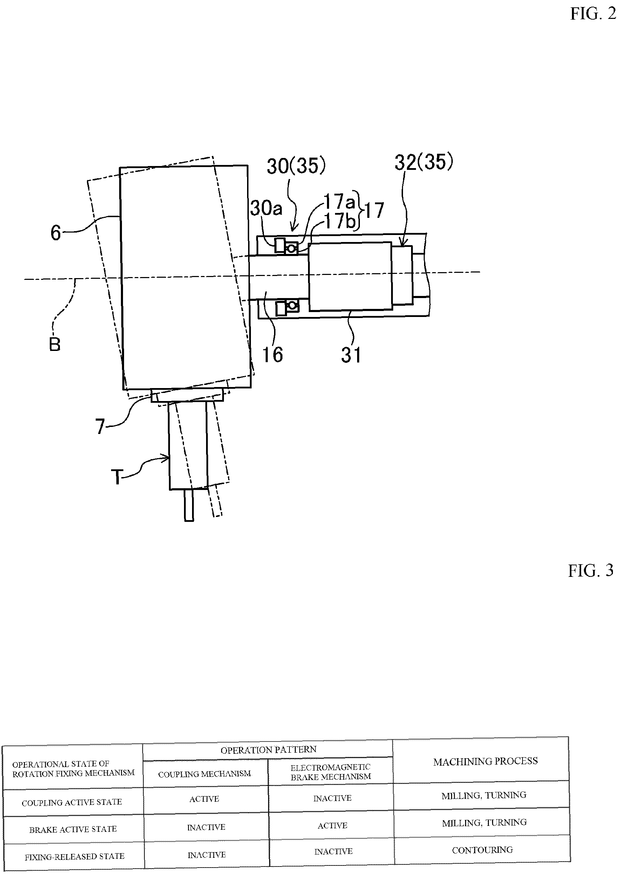

As shown in FIG. 2, the tool spindle headstock 6 is fixed to a pivot drive shaft 16 rotatably supported by the ram 15, and is configured to be pivotable about a B-axis (an example of predetermined axis) parallel to the Y-axis by a pivot motor 31 (an example of pivot drive unit) coupled with the pivot drive shaft 16.

The pivot drive shaft 16 is supported to be rotatable about the B-axis by a front bearing 17 and a rear bearing (not shown) provided inside the ram 15, and is configured to be capable of fixing the rotation about the B-axis by the rotation fixing mechanism 35. The rotation fixing mechanism 35 includes an electromagnetic brake mechanism 32 attached to the pivot motor 31 and a coupling mechanism 30 provided in the ram 15. The coupling mechanism 30 corresponds to a first fixing mechanism unit and the electromagnetic brake mechanism 32 corresponds to a second fixing mechanism unit.

The electromagnetic brake mechanism 32 may employ a well-known configuration including a movable member that rotates along with a motor shaft, and a friction member that is driven in the axial direction by an electromagnetic force to come into contact with the movable member.

The coupling mechanism 30 has a ring-shaped piston 30a arranged in front of the front bearing 17. The piston 30a is configured to be movable parallel to the B-axis by means of hydraulic pressure. The piston 30a has meshing teeth formed on the rear end facet thereof in an annular region centered about the B-axis. Each of an outer ring 17a and an inner ring 17b of the front bearing 17 also has meshing teeth formed on the front end facet thereof in an annular region centered about the B-axis. The meshing teeth of the piston 30a, the meshing teeth of the outer ring 17a of the front bearing 17, and the meshing teeth of the inner ring 17b of the front bearing 17 constitute a three-piece coupling, where the meshing teeth of the piston 30a mesh with both the meshing teeth of the outer ring 17a and the meshing teeth of the inner ring 17b of the front bearing 17 when the piston 30a moves rearward. This fixes the pivot drive shaft 16 in a non-rotatable manner, and the tool spindle headstock 6 coupled with the pivot drive shaft 16 is fixed (clamped) at a desired pivot angle.

The rotation fixing mechanism 35 is configured to be capable of switching between a plurality of operational states that are different in an active/inactive state of the coupling mechanism 30 and that of the electromagnetic brake mechanism 32. As shown in FIG. 3, the plurality of operational states includes three states: a coupling active state where only the coupling mechanism 30 is active; a brake active state where only the electromagnetic brake mechanism 32 is active; and a fixing-released state where both the coupling mechanism 30 and the electromagnetic brake mechanism 32 are inactive. In the coupling active state and the brake active state, the tool spindle headstock 6 is fixed in a non-rotatable manner together with the pivot drive shaft 16, allowing milling and turning with the tool T mounted on the tool spindle 7. The user can select at his/her discretion which of the coupling active state and brake active state to employ for milling and turning. In the fixing-released state, the tool spindle headstock 6 is rotatable about the B-axis together with the pivot drive shaft 16, allowing contouring with the tool T mounted on the tool spindle 7. In a positional deviation measurement mode, which is described later, the rotation fixing mechanism 35 is controlled to come into the same state (in this example, the coupling active state, for example) every time.

The tool spindle headstock 6 incorporates a spindle motor therein that rotationally drives the tool spindle 7, and the tool T is detachably mounted on the distal end of the tool spindle 7. Further, in place of the tool T, a touch probe 20, which is described later, can be mounted to the distal end of the tool spindle 7.

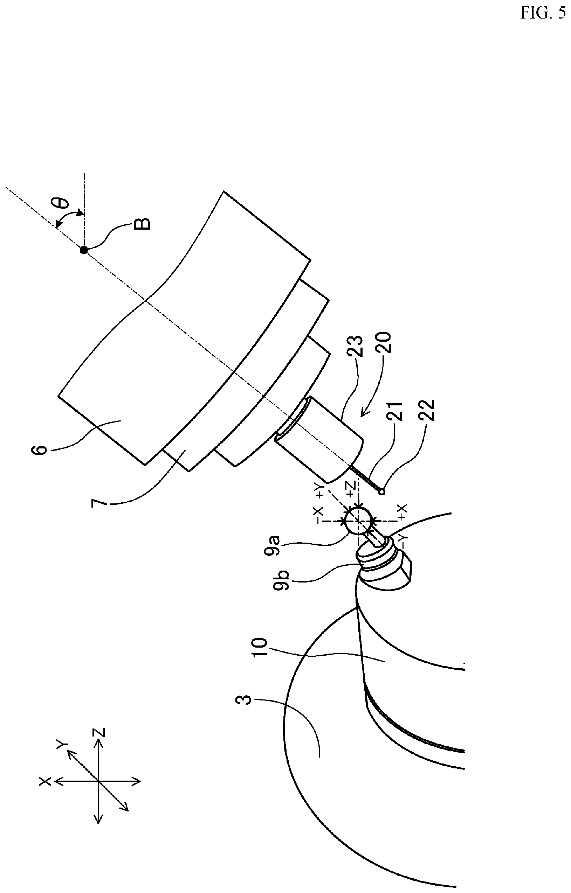

The touch probe 20 is a contact-type measurement sensor and is used in the positional deviation measurement mode before the start of machining the workpiece W. The positional deviation measurement mode is a mode different from a normal operation mode for machining the workpiece W, and is a mode for measuring a deviation amount in the relative position between the tool spindle 7 and each of the workpiece spindles 10, 11 by measuring a reference ball 9a (see FIG. 5) attached to the workpiece spindles 10, 11 by using the touch probe 20. The deviation amount measured in the positional deviation measurement mode is used as a correction amount in machining the workpiece W in the normal operation mode.

As shown in FIG. 4, the controller 50 has a program storage unit 51, a program execution unit 52, and a drive control unit 53. Further, the controller 50 is connected to an NC operation panel 60 and a measurement data processing device 70. The controller 50, the NC operation panel 60, and the measurement data processing device 70 are configured by a computer including a CPU, a RAM, and a ROM.

The NC operation panel 60 has an input unit 61 and a display unit 62. The display unit 62 is capable of displaying the status of execution of an NC program 51a by the program execution unit 52, and other information. The input unit 61 has a mode selection button 61a, a cycle execution button 61b, and a measurement start button 61c. The mode selection button 61a is a button to select either the normal operation mode or the positional deviation measurement mode. The cycle execution button 61b is a button to cause the machine tool 1 to execute machining of the workpiece W based on the NC program 51a in the normal operation mode. The measurement start button 61c is a button to cause the machine tool 1 to start a positional deviation measurement process using the touch probe 20 in the positional deviation measurement mode.

The program storage unit 51 stores the NC program 51a to be executed in the normal operation mode, and a positional deviation measurement program 51b to be executed in the positional deviation measurement mode.

The program execution unit 52 executes the NC program 51a or the positional deviation measurement program 51b according to a command input on the input unit 61 of the NC operation panel 60, and transmits command signals (e.g., speed command signals, position command signals) defined in each of the programs 51a, 51b to the drive control unit 53. Specifically, when the cycle execution button 61b is pressed while the normal operation mode is selected using the mode selection button 61a, the program execution unit 52 executes the NC program 51a stored in the program storage unit 51 and transmits command signals to the drive control unit 53 so that the machine tool 1 executes an operation defined in the NC program 51a.

When the measurement start button 61c is pressed while the positional deviation measurement mode is selected using the mode selection button 61a, the program execution unit 52 executes the positional deviation measurement program 51b stored in the program storage unit 51 and transmits command signals to the drive control unit 53 so that the machine tool 1 executes the measurement of the reference ball 9a using the touch probe 20.

The drive control unit 53 is a functional unit configured to control the operations of a feed motor 33 (an example of feed mechanism unit), a spindle motor 34, the pivot motor 31, the coupling mechanism 30, and the electromagnetic brake mechanism 32. The feed motor 33 executes feeding in the X-axis direction, Y-axis direction, and Z-axis direction and includes the feed motors 33a to 33d described above. Further, the spindle motor 34 includes the motors driving the first workpiece spindle 10, the second workpiece spindle 11, and the tool spindle 7. During the normal operation mode, the drive control unit 53 controls driving of the feed motor 33 so as to correct a deviation amount in the relative position between the workpiece W and the tool T, based on the positional deviation data generated in the measurement data processing device 70, which is described later.

As shown in FIG. 5, the touch probe 20 has a stylus 21, a spherical measurement element 22 fixed to the distal end of the stylus 21, and a circuit case 23 connected to the proximal end of the stylus 21. The circuit case 23 houses an output circuit that detects displacement of the stylus 21 when the measurement element 22 contacts the measurement subject (in this example, the reference ball 9a described later), and outputs an on/off signal. The on/off signal output from this output circuit is input to the measurement data processing device 70.

The reference ball 9a is mounted on the end facet of each of the first workpiece spindle 10 and second workpiece spindle 11 by an operator, which is described later. The reference ball 9a is fixed integrally to a mounting jig 9b, and the mounting jig 9b is positioned and fixed on the end facet of each of the workpiece spindles 10, 11 (FIG. 5 only illustrates the first workpiece spindle 10).

The touch probe 20 is mounted on the tool spindle 7, and the movement of the tool spindle headstock 6 accompanying the measurement operation of the machine tool 1 causes the measurement element 22 at the distal end of the probe to contact the reference ball 9a from five directions: -X, +X, -Y, +Y, and +Z (see the arrows in FIG. 5). The on/off signals output from the touch probe 20 due to the contact of this measurement element 22 are input to the measurement data processing device 70. Note that the number of measurement points by the touch probe 20 is not necessarily limited to five, as long as three or more points are ensured.

As shown in FIG. 4, the measurement data processing device 70 includes: a positional deviation calculation unit 71; and a data storage unit 72. The positional deviation calculation unit 71 calculates the contact position between the measurement element 22 of the touch probe 20 and the reference ball 9a based on the on/off signals input from the touch probe 20, and calculates the center position (an example of positional information) of the reference ball 9a based on the calculated contact position. Then, the positional deviation calculation unit 71 calculates a deviation amount of the calculated center position of the reference ball 9a from the normal position (a position geometrically determined based on design values), and generates data on the calculated deviation amount as positional deviation data representing the deviation amount in the relative position between each of the workpiece spindles 10, 11, to which the reference ball 9a is attached, and the tool spindle 7.

The positional deviation calculation unit 71 then stores the generated positional deviation data in the data storage unit 72. Note that the normal position of the reference ball 9a attached to the workpiece spindle 10 of the first workpiece spindle headstock 3, which is a fixed spindle headstock, is geometrically determined based on design values. On the other hand, the normal position of the reference ball 9a attached to the workpiece spindle 11 of the second workpiece spindle headstock 4, which is a movable spindle headstock, may be determined based on, for example, design values and a movement distance that is calculated from a command value to move the second workpiece spindle headstock 4 to an intended usage position, an output value of a linear scale detecting the position of the second workpiece spindle headstock 4 in its movement direction, an output value of a rotary encoder of the feed motor 33 driving the second workpiece spindle headstock 4, or the like.

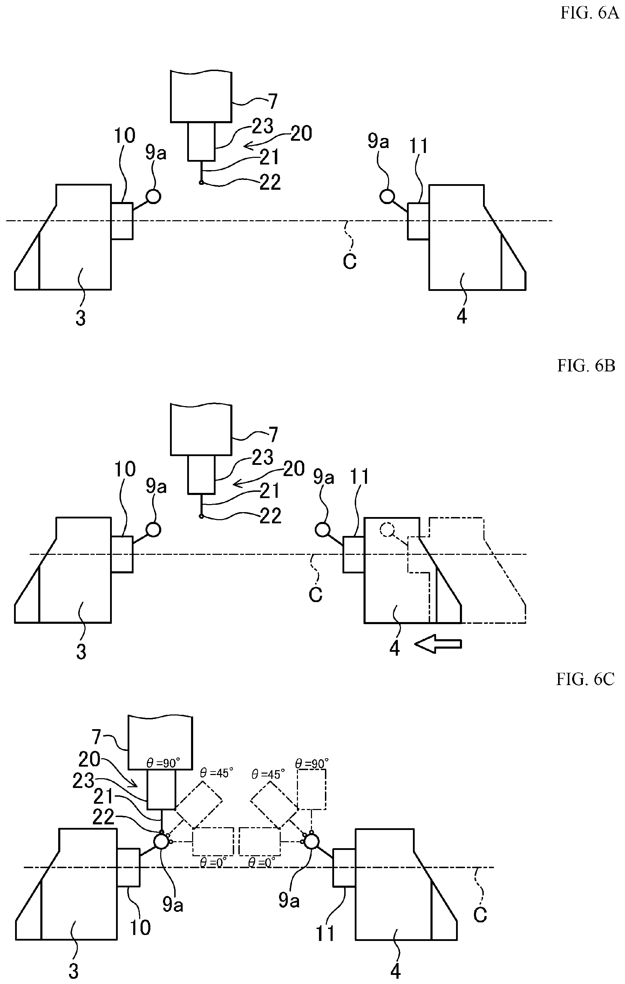

Next, the process of the measurement of the reference ball 9a in the positional deviation measurement mode will be described in detail, with reference to FIG. 6A to FIG. 6C.

As shown in FIG. 6A, first, an operator attaches the reference ball 9a to each of the first workpiece spindle 10 and the second workpiece spindle 11, and attaches the touch probe 20 (an example of measurement sensor) to the tool spindle 7. Note that the touch probe 20 may be automatically attached to the tool spindle 7 by the tool changer 8.

After the operator has completed attaching the reference ball 9a and the touch probe 20, the operator selects the positional deviation measurement mode by using the mode selection button 61a of the NC operation panel 60. **In** the positional deviation measurement mode, the operation of the cycle execution button 61b and the like used in the normal operation mode is disabled. When the worker presses the measurement start button 61c in this positional deviation measurement mode, the program execution unit 52 of the controller 50 executes the positional deviation measurement program 51b, and the machine tool 1 starts a measurement operation under the control by the drive control unit 53. **In** this measurement operation, as shown in FIG. 6B, the second workpiece spindle headstock 4 is moved by the feed motor 33 under the control of the drive control unit 53 to an intended usage position for NC machining of the workpiece W. The intended usage position is specified by the drive control unit 53 analyzing the NC program 51a stored in the program storage unit 51. Note that, while the example in FIG. 6B shows that the intended usage position of the second workpiece spindle headstock 4 (indicated by the solid line) is located to the left of its original position (indicated by the two-dot chain line), the intended usage position of the second workpiece spindle headstock 4 is not limited to such a position and may also be located to the right of its original position.

Then, as shown in FIG. 6C, after the second workpiece spindle headstock 4 moves to the intended usage position, the tool spindle headstock 6 is successively moved to a plurality of preset angular positions with respect to each reference ball 9a (in this example, three angular positions where the pivot angle θ about the B-axis is 0°, 45°, and 90°) by the feed motor 33 and the pivot motor 31 under the control by the drive control unit 53. At each angular position, the measurement element 22 of the touch probe 20 contacts the reference ball 9a from the aforementioned five directions (-X, +X, -Y, +Y, and +Z; see FIG. 5), and the on/off signals output from the touch probe 20 upon the contact are input to the measurement data processing device 70. The measurement data processing device 70 calculates the deviation amount of the center position of each reference ball 9a based on the on/off signals from the touch probe 20, and stores the calculated deviation amount as positional deviation data in the data storage unit 72, as described above.

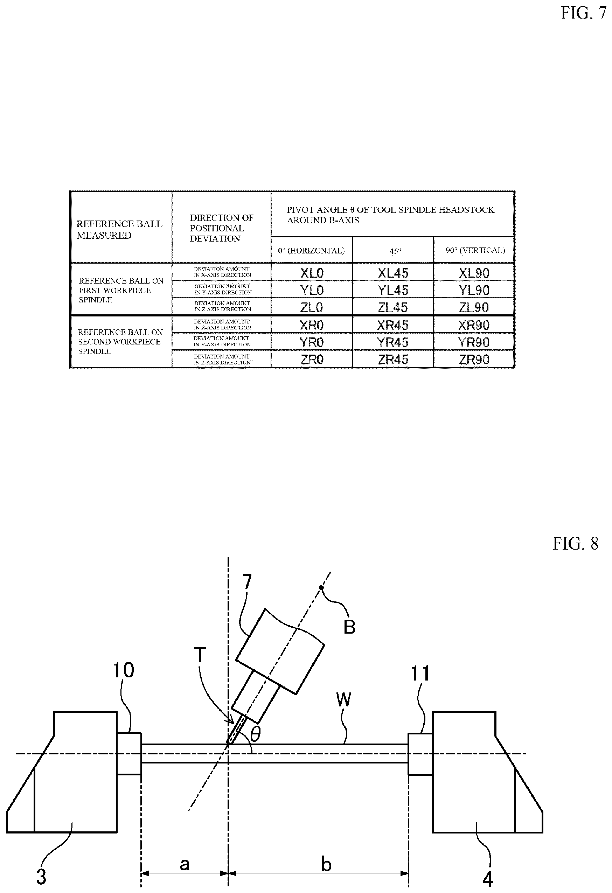

FIG. 7 shows an example of the positional deviation data stored in the data storage unit 72 of the measurement data processing device 70. The top three rows represent the positional deviation amounts in the X-axis direction, the Y-axis direction, and the Z-axis direction of the center position of the reference ball 9a attached to the first workpiece spindle 10. The bottom three rows represent the positional deviation amounts in the X-axis direction, the Y-axis direction, and the Z-axis direction of the center position of the reference ball 9a attached to the second workpiece spindle 11. The positional deviation amounts are shown in three columns corresponding to the pivot angle θ about the B-axis of the tool spindle headstock 6. The first column, the second column, and the third column from the left correspond to the cases where the pivot angle θ is 0°, 45°, and 90°, respectively. The deviation amounts of the center position of the reference ball 9a of the first workpiece spindle 10 shown in the positional deviation data correspond to the deviation amount in the relative position between the first workpiece spindle 10 and the tool spindle 7. The deviation amounts of the center position of the reference ball 9a of the second workpiece spindle 11 correspond to the deviation amount in the relative position between the second workpiece spindle 11 and the tool spindle 7. Note that, in FIG. 7, each deviation amount is represented by three alphabetical characters (e.g., XL0) for the sake of convenience; however, this will be replaced with a numerical value in actual use.

Next, correction control of the relative position between the workpiece W and the tool T executed based on the positional deviation data by the drive control unit 53 of the controller 50 in the normal operation mode will be described.

The drive control unit 53 first estimates, based on the positional deviation data stored in the data storage unit 72, a deviation amount in the relative position between the workpiece W and the tool T that is predicted to take place when control of machining of the workpiece W is executed in accordance with the NC program.

Specifically, the drive control unit 53 estimates a linearly interpolated value of the positional deviation data as a deviation amount in the relative position between the workpiece W and the tool T, according to the position of the tool T in the Z-axis direction for workpiece machining and the pivot angle θ of the tool spindle headstock 6 about the B-axis. Here, the estimated deviation amount δx is calculated by the following equation, where: δx, δy, and δz are the estimated deviation amounts in the X-axis direction, the Y-axis direction, and the Z-axis direction, respectively; a and b are the distances from both ends of the workpiece W to the distal end position of the machining tool T are, respectively (see FIG. 8); and θ is the pivot angle of the tool spindle headstock 6 about the B-axis. Note that the deviation amounts δy and δz in the Y-axis direction and the Z-axis direction can be calculated using a similar approach to that for the deviation amount δx in the X-axis direction. Therefore, detailed calculation equations for them are omitted.

$$\delta x = K1 + (K2 - K1) \times \{a / (a + b)\},$$

where,

(i) the case where the pivot angle of the tool spindle headstock 6 about the B-axis is nor smaller than 0° and not greater than 45°,

$$K1 = (XL45\text{-}XL0)\times\theta/45;$$

and

$$K2 = (XR45\text{-}XR0)\times\theta/45,$$

(ii) the case where the pivot angle of the tool spindle headstock 6 about the B-axis is not smaller than 45° and not greater than 90°,

$$K1 = XL45 + (XL90\text{-}XL45)\times\theta/45;$$

and

$$K2 = XR45 + (XR90\text{-}XR45)\times\theta/45.$$

Then, the drive control unit 53 controls the feed motor 33 so as to correct the estimated deviation amounts δx, δy, and δz, thereby correcting the position of the tool spindle headstock 6 in the X-axis direction, Y-axis direction, and Z-axis direction. For example, where δx is 10 μm, δy is 15 μm, and δz is -20 μm, the drive control unit 53 controls the feed motor 33 so as to correct the position of the tool spindle headstock 6 by - 10 μm in the X-axis direction, -15 μm in the Y-axis direction, and +20 μm in the Z-axis direction with respect to the positions defined in the NC program 51a. the deviation amounts in the relative position between the tool T and the workpiece W are thus corrected, thus improving the accuracy of machining of the workpiece W.

As described above, in the present embodiment, the center position of the reference ball 9a attached to each of the first workpiece spindle headstock 3 and second workpiece spindle headstock 4 is measured by the touch probe 20. While the workpiece is machined, the deviation amount in the relative position between the workpiece W and the tool T is estimated based on the positional deviation data representing the deviation amount from the normal position of the measured center position, and the feed motor 33 is controlled so as to correct the estimated deviation amount. Thus, the accuracy of machining of the workpiece W by the tool T is improved.

Further, in this embodiment, the measurement of the reference ball 9a on the second workpiece spindle 11 by the touch probe 20 is performed while keeping the second workpiece spindle headstock 4 in the intended usage position for machining the workpiece. Therefore, the position of the second workpiece spindle headstock 4 when measuring the reference ball 9a is identical to that when machining the workpiece. As a result, the relative position between the workpiece W and the tool T can be accurately corrected during machining of the workpiece, based on the positional information (in this example, the deviation amount of the center position) of the reference ball 9a obtained through measurement.

Further, in the present embodiment, a value obtained by performing linear interpolation on the positional deviation data (i.e., the deviation amount in the relative position between each of the workpiece spindles 10 and 11 and the tool spindle 7) according to the tool position along the extending direction of the workpiece W is estimated as the deviation amount in the relative position between the workpiece W and the tool T at the corresponding tool position. This allows for accurately estimating the deviation amount in the relative position between the workpiece W and the tool T. Consequently, the accuracy of correction of the relative position between the workpiece W and the tool T using the feed motor 33 can be significantly improved.

(Embodiment 2)

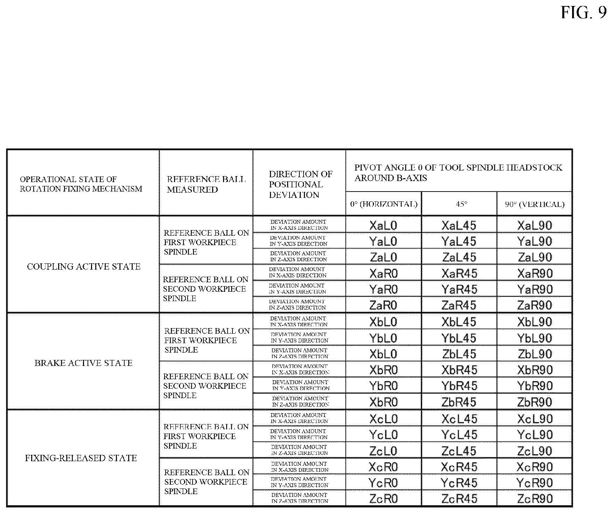

FIG. 9 is a diagram corresponding to FIG. 7 for Embodiment 2. This embodiment is different from the above-described Embodiment 1 in that generation of the positional deviation data and correction control based on the positional deviation data are executed taking into account the operational state of the rotation fixing mechanism 35 of the pivot drive shaft 16. Note that, since the hardware configuration of the machine tool 1 is the same as that in Embodiment 1, the same reference characters are given to the same components and detailed descriptions for such components are omitted.

Namely, in the present embodiment, when the measurement start button 61c is pressed in the positional deviation measurement mode, the measurement of the reference ball 9a on each of the workpiece spindles 10 and 11 using the touch probe 20 is performed through the same steps as those in Embodiment 1, in each of the coupling active state, brake active state, and fixing-released state, under the control by the drive control unit 53 (see FIG. 3), the positional deviation data is generated by the positional deviation calculation unit 71 of the measurement data processing device 70, and the positional deviation data is stored in the data storage unit 72.

FIG. 9 shows an example of the positional deviation data stored in the data storage unit 72 of the measurement data processing device 70. In this positional deviation data, the deviation amounts are described in the same data structure as in Embodiment 1 for each of the coupling active state, brake active state, and fixing-released state. In FIG. 9, each deviation amount is represented by four alphabetical characters (e.g., XaL0) for the sake of convenience; however, this will be replaced with a numerical value in actual use.

Next, correction control of the relative position between the workpiece W and the tool T executed based on the positional deviation data by the drive control unit 53 of the controller 50 in the normal operation mode will be described.

When executing the correction control, the drive control unit 53 first determines whether the current operational state of the rotation fixing mechanism 35 (the coupling mechanism 30 and the electromagnetic brake mechanism 32) is the coupling active state, the brake active state, or the fixing-released state. Then, the drive control unit 53 extracts (identifies) the positional deviation data corresponding to the determined operational state from the positional deviation data stored in the data storage unit 72 (see FIG. 9), estimates the deviation amount in the relative position between the workpiece W and the tool T based on the extracted positional deviation data, and controls the feed motor 33 so as to correct the estimated deviation amount. As in Embodiment 1, the deviation amount in the relative position is estimated by performing linear interpolation on the positional deviation data based on the position of the tool T in the Z-axis direction and the pivot angle θ of the tool spindle headstock 6 about the B-axis for machining of the workpiece.

As described, in the positional deviation measurement mode in the present embodiment, the measurement of the reference ball 9a using the touch probe 20 is performed in each of the three operational states of the rotation fixing mechanism 35 (the coupling active state, the brake active state, and the fixing-released state), thus generating the positional deviation data. When machining the workpiece, the relative position between the workpiece W and the tool T is corrected based on the positional deviation data corresponding to the current operational state of the rotation fixing mechanism 35. This allows the accuracy of correction of the relative position between the workpiece W and the tool T to be improved as much as possible. In other words, the activation of the coupling mechanism 30 or the electromagnetic brake mechanism 32, both of which are components of the rotation fixing mechanism 35, causes a change in the mating gap between components inside the machine and the like, whereby, for example, the position of the tool spindle headstock 6 is changed as shown by the two-dot chain line in FIG. 2. In this embodiment, the relative position between the tool T and the workpiece W can be corrected taking into account the positional changes of the tool spindle headstock 6. As a result, the correction accuracy can be significantly improved compared to a case where the operational state of the rotation fixing mechanism 35 is not taken into account.

(Other Embodiments)

In each of the above embodiments, the touch probe 20 is mounted on the tool spindle 7 held by the tool spindle headstock 6; however, the present invention is not limited to this. The touch probe 20 may be mounted on the turret 5a of the turret tool post 5. In this case, the deviation amount in the center position of the reference ball 9a measured by the touch probe 20 corresponds to the deviation amount in the relative position between the turret 5a and each of the workpiece spindles 10 and 11. Therefore, during machining of the workpiece, the relative position between the tool 5b mounted on the turret 5a and the workpiece W can be corrected by controlling the feed motor 33 so as to correct the deviation amount. Note that, in this case, the turret 5a corresponds to the machining body holding unit, and the turret tool post 5 corresponds to the machining body movable table.

In each of the above embodiments, the deviation amount in the relative position between the workpiece W and the tool T is corrected by correcting the position of the tool spindle headstock 6 by the feed motor 33; however, the present invention is not limited to this. The position of each of the workpiece spindle headstocks 3 and 4 may be corrected, or both the position of each of the workpiece spindle headstocks 3 and 4 and the position of the tool spindle headstock 6 may be corrected. In other words, the movement target and the moving direction by the feed motor 33 are not limited as long as the relative position between the workpiece W and the tool T can be corrected.

In each of the above embodiments, the deviation amount in the relative position between the workpiece W and the tool T is corrected in all of the X-axis direction, Y-axis direction, and Z-axis direction; however, the present invention is not limited to this. For example, the correction may be performed in only one or two of the X-axis direction, Y-axis direction, and Z-axis direction. In such a case, the measurement of the center position of each reference ball 9a by the touch probe 20 only needs to be performed in only one or two axis directions.

In each of the above embodiments, the example described is that the first workpiece spindle headstock 3 is a fixed spindle headstock and the second workpiece spindle headstock 4 is a movable spindle headstock. However, the present invention is not limited to this. That is, the machine tool 1 may include only a single movable spindle headstock or may include two workpiece spindle headstocks both configured as movable spindle headstocks. In the former case, the positional deviation of the reference ball 9a can be measured after that single workpiece spindle headstock is moved to its intended usage position. In the latter case, the positional deviation of the reference ball 9a can be measured after the two workpiece spindle headstocks are moved to their respective intended usage positions. Then, the processes of estimating and correcting the positional deviation amount between the workpiece W and the tool T can be performed as in the embodiments described above.

In each of the above embodiments, the reference ball 9a is employed as an example of the reference object to be attached to each of the first workpiece spindle 10 and second workpiece spindle 11; however, the reference object is not limited to this. For example, a cubic member may be employed as the reference object, and the positions of its sides may be measured by the touch probe 20. Further, the reference object may be a reference mark attached to each of the workpiece spindles 10 and 11. In this case, an image sensor such as a camera may be employed as the measurement sensor to be attached to the tool spindle 7, and the deviation amount in the relative position between each of the workpiece spindles 10 and 11 and the tool spindle 7 can be calculated by measuring the positional deviation of the reference mark by using the image sensor.

In each of the above embodiments, the example descried is that the measurement sensor is configured as the touch probe 20. However, the measurement sensor is not limited to this. For example, the measurement sensor may be configured as a non-contact type probe that utilizes the principle of a laser displacement sensor, or may be configured as an image sensor such as a camera as described above.

In each of the above embodiments, the deviation amount in the center position of the reference ball 9a is calculated as a deviation amount (positional deviation data) in the relative position between the tool spindle 7 and each of the workpiece spindles 10 and 11. However, the present invention is not limited to this. For example, the positional deviation data may be generated by rotating each of the workpiece spindles 10 and 11 by 120°, and based on the positional information of the reference ball 9a measured at each angular position, calculating a deviation amount in the axial center position of each of the workpiece spindles 10 and 11.

In the above embodiments, the machine tool 1 is a multi-tasking turning machine; however, the machine tool 1 is not limited to this. For example, the machine tool 1 may be an additive manufacturing machine, or a hybrid machine capable of executing both cutting and additive manufacturing. In additive manufacturing, for example, a supply nozzle is used in place of the tool T, and a powder material supplied from the supply nozzle onto the workpiece surface is melted by a laser or the like and solidified. In this case, the supply nozzle and/or a laser unit severs as the machining body that machines the workpiece. The deviation amount in the relative position between the workpiece spindle and the machining body holding unit may be determined with respect to the tip of the supply nozzle, on an intended arrival point of the powder material supplied from the supply nozzle, or on a laser irradiation point.

In each of the above embodiments, the reference object and the measurement sensor are attached before moving the movable workpiece spindle headstock. However, the sequence is not limited to this and may be reversed. Since the reference object and the measurement sensor are in a complementary relation, the measurement sensor may be provided on the movable workpiece spindle headstock and the reference object may be provided on the machining body holding unit.

Further, the measurement sensor is not limited to being provided on either the movable workpiece spindle headstock or the machining body holding unit. For example, an internal camera installed within the machine tool or an external camera mounted on a manipulator of a robot such as an AGV that loads and unloads the workpiece to and from the machine tool may be used to capture images including the workpiece spindle of the movable workpiece spindle headstock and its vicinity as well as the machining body holding unit and its vicinity, so that the deviation amount in the relative position can be calculated based on the captured images. In order to facilitate detection of the positions of the workpiece spindle and machining body holding unit from the captured images, for example, a reference object with a predetermined marker may be provided on each of the workpiece spindle and machining body holding unit. Such a reference object may be attached to only one of the workpiece spindle and machining body holding unit. In addition, if the workpiece spindle or the machining body holding unit has a marker or any other feature point that can be used to obtain positional information, it may be used as the reference object.

In each of the above embodiments, the positional deviation amounts between the workpiece spindles 10 and 11 and the tool spindle 7 in the state where the workpiece W is supported at both ends by the first workpiece spindle 10 and the second workpiece spindle 11 are calculated. Values obtained by performing linear interpolation on the calculated positional deviation amounts according to the position of the tool T in the workpiece extending direction (in the direction in which the two workpiece spindles 10 and 11 face each other) are used as the deviation amounts in the relative position between the workpiece W and the tool T at the position of the tool T. However, the interpolation does not necessarily have to be linear. For example, if the deflection amount of the guide rail changes non-linearly according to the position of the second workpiece support table 4, which is a movable support table, the deviation amount may be calculated using a non-linear function. Further, the workpiece W does not necessarily have to be supported at both ends and may be supported in a cantilevered manner. In this case, the deviation amount in the relative position between the workpiece W and the tool T can be estimated by performing interpolation according to the position of the tool T in the workpiece extending direction based on the positional deviation amount between the workpiece spindle that cantilevers the workpiece and the tool spindle 7.

The above description of embodiments is in all respects illustrative and not restrictive. Variations and modifications are possible for those skilled in the art. The scope of the present disclosure is indicated by the claims, not by the embodiments described above. Further, the scope of the present invention encompasses modifications made from the embodiments within a scope equivalent to the claims.

[LISTING OF REFERENCE CHARACTERS]

T    Tool (Machining Body)
W    Workpiece
θ    Pivot Angle
1    Machine Tool
3    First Workpiece Spindle Headstock (Fixed Workpiece Spindle Headstock)
4    Second Workpiece Spindle Headstock (Movable Workpiece Spindle Headstock)
6    Tool Spindle Headstock (Machining Body Movable Table)
7    Tool Spindle (Machining Body Holding Unit)
9a   Reference Ball (Reference Object)
10   First Workpiece Spindle (Workpiece Spindle)
11   Second Workpiece Spindle (Workpiece Spindle)
16   Pivot Drive Shaft
20   Touch Probe (Measurement Sensor)
30   Coupling Mechanism (First Fixing Mechanism Unit)
31   Pivot Motor (Pivot Drive Unit)
32   Electromagnetic Brake Mechanism (Second Fixing Mechanism Unit)
33   Feed Motor (Feed Mechanism Unit)
35   Rotation Fixing Mechanism

**Claims**

1. A correction method of correcting a relative position between a workpiece and a machining body during machining in a machine tool, the machine tool including: a movable workpiece spindle headstock capable of moving in a predetermined direction; a workpiece spindle mounted on the movable workpiece spindle headstock and configured to hold the workpiece; a machining body holding unit configured to hold the machining body that machines the workpiece; a machining body movable table capable of moving in a predetermined direction with the machining body holding unit mounted; a feed mechanism unit capable of changing a relative position between the movable workpiece spindle headstock and the machining body movable table, the correction method comprising:

a moving process of, before a start of machining of the workpiece, moving the movable workpiece spindle headstock by the feed mechanism unit to its intended usage position for machining of the workpiece;

a positional deviation calculation process of calculating a deviation amount in a relative position between the workpiece spindle mounted on the movable workpiece spindle headstock having moved to the intended usage position and the machining body holding unit; and

a correction control process of estimating a deviation amount in the relative position between the workpiece and the machining body during machining of the workpiece based on the deviation amount calculated in the positional deviation calculation process, and controlling the feed mechanism unit so as to correct the estimated deviation amount.

2. The correction method of claim 1, further comprising:

an attachment process of, before the start of machining of the workpiece, attaching a reference object to one of the workpiece spindle mounted on the movable workpiece spindle headstock and the machining body holding unit and attaching a measurement sensor, capable of measuring positional information of the reference object, to the other one of the workpiece spindle and the machining body holding unit, to which the reference object is not attached, wherein, in the positional deviation calculation process, positional information of the reference object is measured by the measurement sensor, and a deviation amount in the relative position between the workpiece spindle and the machining body holding unit is calculated based on the measured positional information.

3. The correction method of claim 2, wherein, in the attachment process, the reference object is attached to the workpiece spindle mounted on the movable workpiece spindle headstock, and the measurement sensor is attached to the machining body holding unit.

4. The correction method of claim 3, wherein:

the machine tool further includes a fixed workpiece spindle headstock immovably fixed to a predetermined position and configured to hold a workpiece spindle coaxially facing the workpiece spindle mounted on the movable workpiece spindle headstock;

the attachment process further includes a process of, before the start of machining of the workpiece, attaching a reference object to the workpiece spindle mounted on the fixed workpiece spindle headstock;

the positional deviation calculation process further includes a process of measuring positional information of the reference object attached to the workpiece spindle mounted on the fixed workpiece spindle headstock by the measurement sensor attached to the machining body holding unit, and calculating a deviation amount in a relative position between the workpiece spindle mounted on the fixed workpiece spindle headstock and the machining body holding unit based on the measured positional information; and

in the correction control process, a deviation amount in the relative position between the workpiece and the machining body during machining of the workpiece is estimated based on the deviation amount in the relative position between each workpiece spindle and the machining body holding unit calculated in the positional deviation calculation process, and the feed mechanism unit is controlled so as to correct the estimated deviation amount.

5. The correction method of claim 3, wherein:

the machine tool includes two movable workpiece spindle headstocks and the two movable workpiece spindle headstocks are arranged so that the workpiece spindles mounted on the two movable workpiece spindle headstocks coaxially face each other;

in the attachment process, a reference object is attached to the workpiece spindle mounted on each of the movable workpiece spindle headstocks;

in the moving process, each of the movable workpiece spindle headstocks is moved to its intended usage position for machining of the workpiece;

in the positional deviation calculation process, positional information of each reference object is measured by the measurement sensor attached to the machining body holding unit, and a deviation amount in the relative position between the workpiece spindle mounted on each of the movable workpiece spindle headstocks and the machining body holding unit is calculated based on the measured positional information of each reference object,; and

in the correction control process, a deviation amount in the relative position between the workpiece and the machining body during machining of the workpiece is estimated based on the deviation amount in the relative position between each workpiece spindle and the machining body holding unit calculated in the positional deviation calculation process, and the feed mechanism unit is controlled so as to correct the estimated deviation amount.

6. The correction method of claim 4 or 5, wherein, in the correction control process, during machining of the workpiece, the deviation amount in the relative position between each workpiece spindle and the machining body holding unit calculated in the positional deviation calculation process is interpolated according to a position of the machining body in a facing direction of the workpiece spindles to estimate a deviation amount in the relative position between the workpiece and the machining body at the position of the machining body, and the feed mechanism unit is controlled so as to correct the estimated deviation amount.

7. The correction method of claim 4 or 5, wherein:

the machine tool is configured to execute machining of the workpiece by the machining body held on the machining body holding unit in a state where both ends of the workpiece in its extending direction are supported by the two workpiece spindles facing each other; and
in the correction control process, during machining of the workpiece, the deviation amount in the relative position between each workpiece spindle and the machining body holding unit calculated in the positional deviation calculation process is linearly interpolated according to a position of the machining body in the extending direction of the workpiece to estimate a deviation amount in the relative position between the workpiece and the machining body at the position of the machining body, and the feed mechanism unit is controlled so as to correct the estimated deviation amount.

8. The correction method of any one of claims 1 to 7, wherein:

the machine tool includes a pivot drive shaft coupled with the machining body movable table and rotatable about a predetermined axis, a pivot drive unit configured to rotationally drive the pivot drive shaft, and a rotation fixing mechanism configured to fix the pivot drive shaft in a non-rotatable manner;
the rotation fixing mechanism comprises a plurality of fixing mechanism units capable of fixing the pivot drive shaft in a non-rotatable manner and is configured to be switchable among a plurality of operational states, which are different in a combination of active/inactive states of the plurality of fixing mechanism units;
the positional deviation calculation process is executed for each of the plurality of operational states; and
in the correction control process, during machining of the workpiece, a current operational state of the rotation fixing mechanism is determined out of the plurality of operational states, a deviation amount corresponding to the operational state determined is specified out of the deviation amounts in the relative position between the workpiece spindle and the machining body holding unit calculated in the positional deviation calculation process, a deviation amount in the relative position between the workpiece and the machining body is estimated based on the deviation amount specified, and the feed mechanism unit is controlled so as to correct the estimated deviation amount.

9. The correction method of claim 8, wherein the rotation fixing mechanism comprises, as the plurality of fixing mechanism units, a first fixing mechanism unit configured to mechanically fix the pivot drive shaft, and a second fixing mechanism unit that is an electromagnetic brake mechanism attached to the pivot drive unit.

10. The correction method of any one of claims 1 to 9, wherein:

the machine tool includes a pivot drive shaft coupled with the machining body movable table and rotatable about a predetermined axis and a pivot drive unit configured to rotationally drive the pivot drive shaft;
in the positional deviation calculation process, the pivot drive shaft is rotated by the pivot drive unit so as to change an angle of the machining body movable table about the predetermined axis to a plurality of preset angular positions, positional information of the reference object is measured at each angular position, and a deviation amount in the relative position between the workpiece spindle and the machining body holding unit is calculated based on the measured positional information; and
in the correction control process, during machining of the workpiece, a pivot angle of the pivot drive shaft about the predetermined axis is obtained, the deviation amount at each angular position calculated in the positional deviation calculation process is linearly interpolated according to the obtained pivot angle to estimate a deviation amount in the relative position between the workpiece and the machining body, and the feed mechanism unit is controlled so as to correct the estimated deviation amount.

11. The correction method of claim 1, wherein, in the positional deviation calculation process, a deviation amount in the relative position between the workpiece spindle and the machining body holding unit is calculated based on an image captured by a camera provided inside or outside the machine tool.

12. A machine tool comprising:

a movable workpiece spindle headstock capable of moving in a predetermined direction;
a workpiece spindle mounted on the movable workpiece spindle headstock and configured to hold a workpiece;
a machining body holding unit configured to hold a machining body that machines the workpiece;
a machining body movable table capable of moving in a predetermined direction with the machining body holding unit mounted;
a feed mechanism unit capable of changing a relative position between the movable workpiece spindle headstock and the machining body movable table; and
a program execution unit configured to execute:

a moving process of, before a start of machining of the workpiece, moving the movable workpiece spindle headstock by the feed mechanism unit to its intended usage position for machining of the workpiece;
a positional deviation calculation process of calculating a deviation amount in a relative position between the workpiece spindle mounted on the movable workpiece spindle headstock having moved to the intended usage position and the machining body holding unit; and
a correction control process of estimating a deviation amount in a relative position between the workpiece and the machining body during machining of the workpiece based on the deviation amount calculated in the positional deviation calculation process, and controlling the feed mechanism unit so as to correct the estimated deviation amount.

13. A program for use in a machine tool, the machine tool including: a movable workpiece spindle headstock capable of moving in a predetermined direction; a workpiece spindle mounted on the movable workpiece spindle headstock and configured to hold a workpiece; a machining body holding unit configured to hold a machining body that machines the workpiece; a machining body movable table capable of moving in a predetermined direction with the machining body holding unit mounted; and a feed mechanism unit capable of changing a relative position between the movable workpiece spindle headstock and the machining body movable table, the program configured to cause a computer to serve as a correction unit configured to execute:

a moving process of, before a start of machining of the workpiece, moving the movable workpiece spindle headstock by the feed mechanism unit to its intended usage position for machining of the workpiece;
a positional deviation calculation process of calculating a deviation amount in a relative position between the workpiece spindle mounted on the movable workpiece spindle headstock having moved to the intended usage position and the machining body holding unit; and
a correction control process of estimating a deviation amount in a relative position between the workpiece and the machining body during machining of the workpiece based on the deviation amount calculated in the positional deviation calculation process, and controlling the feed mechanism unit so as to correct the estimated deviation amount.

FIG. 1

FIG. 2

FIG. 3

| OPERATIONAL STATE OF ROTATION FIXING MECHANISM | OPERATION PATTERN | | MACHINING PROCESS |
| --- | --- | --- | --- |
| | COUPLING MECHANISM | ELECTROMAGNETIC BRAKE MECHANISM | |
| COUPLING ACTIVE STATE | ACTIVE | INACTIVE | MILLING, TURNING |
| BRAKE ACTIVE STATE | INACTIVE | ACTIVE | MILLING, TURNING |
| FIXING-RELEASED STATE | INACTIVE | INACTIVE | CONTOURING |

FIG. 4

FIG. 5

FIG. 6A

FIG. 6B

FIG. 6C

FIG. 7

| REFERENCE BALL MEASURED | DIRECTION OF POSITIONAL DEVIATION | PIVOT ANGLE θ OF TOOL SPINDLE HEADSTOCK AROUND B-AXIS | | |
|---|---|---|---|---|
| | | 0° (HORIZONTAL) | 45° | 90° (VERTICAL) |
| REFERENCE BALL ON FIRST WORKPIECE SPINDLE | DEVIATION AMOUNT IN X-AXIS DIRECTION | XL0 | XL45 | XL90 |
| | DEVIATION AMOUNT IN Y-AXIS DIRECTION | YL0 | YL45 | YL90 |
| | DEVIATION AMOUNT IN Z-AXIS DIRECTION | ZL0 | ZL45 | ZL90 |
| REFERENCE BALL ON SECOND WORKPIECE SPINDLE | DEVIATION AMOUNT IN X-AXIS DIRECTION | XR0 | XR45 | XR90 |
| | DEVIATION AMOUNT IN Y-AXIS DIRECTION | YR0 | YR45 | YR90 |
| | DEVIATION AMOUNT IN Z-AXIS DIRECTION | ZR0 | ZR45 | ZR90 |

FIG. 8

FIG. 9

| OPERATIONAL STATE OF ROTATION FIXING MECHANISM | REFERENCE BALL MEASURED | DIRECTION OF POSITIONAL DEVIATION | PIVOT ANGLE θ OF TOOL SPINDLE HEADSTOCK AROUND B-AXIS | | |
|---|---|---|---|---|---|
| | | | 0° (HORIZONTAL) | 45° | 90° (VERTICAL) |
| COUPLING ACTIVE STATE | REFERENCE BALL ON FIRST WORKPIECE SPINDLE | DEVIATION AMOUNT IN X-AXIS DIRECTION | XaL0 | XaL45 | XaL90 |
| | | DEVIATION AMOUNT IN Y-AXIS DIRECTION | YaL0 | YaL45 | YaL90 |
| | | DEVIATION AMOUNT IN Z-AXIS DIRECTION | ZaL0 | ZaL45 | ZaL90 |
| | REFERENCE BALL ON SECOND WORKPIECE SPINDLE | DEVIATION AMOUNT IN X-AXIS DIRECTION | XaR0 | XaR45 | XaR90 |
| | | DEVIATION AMOUNT IN Y-AXIS DIRECTION | YaR0 | YaR45 | YaR90 |
| | | DEVIATION AMOUNT IN Z-AXIS DIRECTION | ZaR0 | ZaR45 | ZaR90 |
| BRAKE ACTIVE STATE | REFERENCE BALL ON FIRST WORKPIECE SPINDLE | DEVIATION AMOUNT IN X-AXIS DIRECTION | XbL0 | XbL45 | XbL90 |
| | | DEVIATION AMOUNT IN Y-AXIS DIRECTION | YbL0 | YbL45 | YbL90 |
| | | DEVIATION AMOUNT IN Z-AXIS DIRECTION | XbL0 | ZbL45 | ZbL90 |
| | REFERENCE BALL ON SECOND WORKPIECE SPINDLE | DEVIATION AMOUNT IN X-AXIS DIRECTION | XbR0 | XbR45 | XbR90 |
| | | DEVIATION AMOUNT IN Y-AXIS DIRECTION | YbR0 | YbR45 | YbR90 |
| | | DEVIATION AMOUNT IN Z-AXIS DIRECTION | XbR0 | ZbR45 | ZbR90 |
| FIXING-RELEASED STATE | REFERENCE BALL ON FIRST WORKPIECE SPINDLE | DEVIATION AMOUNT IN X-AXIS DIRECTION | XcL0 | XcL45 | XcL90 |
| | | DEVIATION AMOUNT IN Y-AXIS DIRECTION | YcL0 | YcL45 | YcL90 |
| | | DEVIATION AMOUNT IN Z-AXIS DIRECTION | ZcL0 | ZcL45 | ZcL90 |
| | REFERENCE BALL ON SECOND WORKPIECE SPINDLE | DEVIATION AMOUNT IN X-AXIS DIRECTION | XcR0 | XcR45 | XcR90 |
| | | DEVIATION AMOUNT IN Y-AXIS DIRECTION | YcR0 | YcR45 | YcR90 |
| | | DEVIATION AMOUNT IN Z-AXIS DIRECTION | ZcR0 | ZcR45 | ZcR90 |

**EP 4 592 778 A1**

## INTERNATIONAL SEARCH REPORT

| International application No. |
|---|
| **PCT/JP2023/034448** |

### A. CLASSIFICATION OF SUBJECT MATTER

*G05B 19/404*(2006.01)i; *B23B 25/06*(2006.01)i; *B23Q 15/24*(2006.01)i; *B23Q 17/22*(2006.01)i
FI:   G05B19/404 G; B23B25/06; B23Q15/24; B23Q17/22 Z

According to International Patent Classification (IPC) or to both national classification and IPC

### B. FIELDS SEARCHED

Minimum documentation searched (classification system followed by classification symbols)

G05B19/404; B23B25/06; B23Q15/24; B23Q17/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-194451 A (OKUMA CORP.) 26 October 2017 (2017-10-26)<br>entire text, all drawings | 1-13 |
| A | JP 2017-61012 A (OKUMA CORP.) 30 March 2017 (2017-03-30)<br>entire text, all drawings | 1-13 |
| A | JP 2016-218746 A (OKUMA CORP.) 22 December 2016 (2016-12-22)<br>entire text, all drawings | 1-13 |
| A | JP 2011-93069 A (MURATA MACHINERY LTD.) 12 May 2011 (2011-05-12)<br>entire text, all drawings | 1-11 |
| A | JP 5-245740 A (NAKAMURA TOME PRECISION INDUSTRY CO., LTD.) 24 September 1993 (1993-09-24)<br>entire text, all drawings | 1-13 |
| A | JP 2022-24542 A (SHIBAURA MACHINE CO., LTD.) 09 February 2022 (2022-02-09)<br>entire text, all drawings | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/034448** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-1337 A (CITIZEN WATCH CO., LTD.) 11 January 2018 (2018-01-11)<br>entire text, all drawings | 1-13 |
| A | JP 2008-93741 A (TSUGAMI CORP.) 24 April 2008 (2008-04-24)<br>entire text, all drawings | 1-13 |

Form PCT/ISA/210 (second sheet) (January 2015)

## INTERNATIONAL SEARCH REPORT
### Information on patent family members

International application No.

**PCT/JP2023/034448**

| Patent document cited in search report | | | Publication date (day/month/year) | Patent family member(s) | | | Publication date (day/month/year) |
|---|---|---|---|---|---|---|---|
| JP | 2017-194451 | A | 26 October 2017 | US entire text, all drawings | 2017/0297160 | A1 | |
| | | | | DE | 102017206571 | A1 | |
| | | | | CN | 107303643 | A | |
| JP | 2017-61012 | A | 30 March 2017 | (Family: none) | | | |
| JP | 2016-218746 | A | 22 December 2016 | (Family: none) | | | |
| JP | 2011-93069 | A | 12 May 2011 | US entire text, all drawings | 2013/0104707 | A1 | |
| | | | | WO | 2011/052442 | A1 | |
| | | | | EP | 2481521 | A1 | |
| | | | | KR | 10-2012-0083551 | A | |
| | | | | CN | 102666007 | A | |
| JP | 5-245740 | A | 24 September 1993 | (Family: none) | | | |
| JP | 2022-24542 | A | 09 February 2022 | WO entire text, all drawings | 2022/024916 | A1 | |
| | | | | DE | 112021004058 | T5 | |
| | | | | TW | 202212047 | A | |
| | | | | KR | 10-2023-0029941 | A | |
| | | | | CN | 116194850 | A | |
| JP | 2018-1337 | A | 11 January 2018 | (Family: none) | | | |
| JP | 2008-93741 | A | 24 April 2008 | US entire text, all drawings | 2010/0154605 | A1 | |
| | | | | WO | 2008/044366 | A1 | |
| | | | | EP | 2070615 | A1 | |
| | | | | CN | 101351287 | A | |
| | | | | KR | 10-2008-0066662 | A | |
| | | | | TW | 200817117 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017194451 A